# EUROPÄISCHE PATENTSCHRIFT

(11) **EP 3 747 806 B1**
(45) Veröffentlichungstag und Bekanntmachung des Hinweises auf die Patenterteilung: **06.09.2023**
(21) Anmeldenummer: 20175975.0
(22) Anmeldetag: 22.05.2020
(51) Int. Cl.: B65G 21/20

(54) **VORRICHTUNG ZUM ANPASSEN EINER FÜHRUNGSBREITE EINER FÖRDEREINRICHTUNG**
DEVICE FOR ADJUSTING A GUIDE WIDTH OF A CONVEYOR
DISPOSITIF D'AJUSTEMENT D'UNE LARGEUR DE GUIDAGE D'UN DISPOSITIF DE TRANSPORT

(30) Priorität: 05.06.2019 DE 102019115195
(43) Veröffentlichungstag der Anmeldung: 09.12.2020
(73) Patentinhaber: KRONES AG, 93073 Neutraubling (DE)
(72) Erfinder: Buchner, Christian, 93073 Neutraubling (DE)
(74) Vertreter: v. Bezold & Partner Patentanwälte - PartG mbB

(56) Entgegenhaltungen:
- EP-A1- 2 354 050
- WO-A1-2009/150379
- TW-U- M 564 031
- US-A1- 2007 095 247
- US-A1- 2008 099 311
- US-A1- 2012 097 505
- US-B1- 6 244 429

## Beschreibung

### Technisches Gebiet

Die Erfindung betrifft eine Vorrichtung zum Anpassen einer Führungsbreite einer Fördereinrichtung zum Fördern von Behältern für eine Behälterbehandlungsanlage.

### Technischer Hintergrund

Aus dem Stand der Technik sind bereits unterschiedliche Ausführungsvarianten von Vorrichtungen zum Transportieren von Behältern, wie Flaschen oder Dosen, in Behälterbehandlungsanlagen bekannt. Während der Beförderung werden die jeweiligen Behälter bewegt und hierbei entlang eines gewünschten Transportpfades gelenkt. Hierzu sind häufig ein oder mehrere Führungselemente vorhanden, die dem Transportpfad folgen und an denen die Behälter geführt werden.

Derartige Führungs- oder Leitelemente können beispielsweise durch Stangen, Bleche o. dgl. ausgebildet sein. Die jeweils beförderten Artikel können während ihrer Bewegung in Oberflächenkontakt mit den Führungselementen stehen und werden durch die Führungselemente in ihren Bahnen gelenkt.

Sollen Behälter mit einer ersten Geometrie und nachfolgend bzw. zu einem anderen Zeitpunkt Behälter mit einer davon abweichenden zweiten Geometrie die Transportvorrichtung passieren, so kann ein Anpassen der Position des oder der jeweiligen Führungselemente notwendig sein. Die Position der Führungselemente muss bei solchen Verstellvorgängen derart angepasst werden, dass der Abstand zwischen zwei Führungselementen beispielsweise etwas mehr als die Behälterbreite bzw. die Behälterhöhe beträgt, sodass die Behälter, ohne zu klemmen und ohne zu kippen, zwischen den jeweiligen Führungselementen geführt werden können.

Die US 8,770,392 B2 bezieht sich auf eine Breitenverstellvorrichtung für einen Förderkorridor. Die Vorrichtung weist eine drehbare Steuerwelle in Form einer Endlosschnecke und ein Schneckenrad auf. Die Welle ist eine biegsame Welle mit einer großen Länge, die mit einem Zughaltesystem in Eingriff steht, um die Zug- und Druckkräfte in Drehrichtung aufzunehmen. Zur Verstellung einer Breite des Förderkorridors wird die Welle rotiert.

Die US 2007/095247 A1 offenbart eine Vorrichtung nach dem Oberbegriff des Anspruchs 1. Dieses Führungspositionierungssystem für eine Behältertransportlinie umfasst eine Führungsbaugruppe, die ein Paar von Führungssegmenten trägt, die sich einander gegenüberliegend entlang der Behältertransportlinie erstrecken, und ein Betätigungssystem. Die Führungssegmente befinden sich in einer Grundstellung, und das Betätigungssystem ist so eingestellt, dass es der Grundstellung entspricht, um das Führungspositionierungssystem zu kalibrieren. Darüber hinaus koppelt und betätigt das Betätigungssystem selektiv die Führungsbaugruppe, so dass sich die Führungssegmente in eine vorbestimmte Position weg von der Grundposition bewegen.

Die EP 2 354 050 A1 offenbart ein Kompensatorsystem zum Einstellen von gegenüberliegenden Seitenführungen eines oder mehrerer Förderer, die schnell an die Aufnahme von Behältern unterschiedlicher Größe angepasst werden können. Das System umfasst eine oder mehrere Vorrichtungen, die von einer einzigen Leitung angetrieben werden, die sich an einer Seite des Förderers befindet und aus einer oder mehreren steifen Leitungen und aus einer oder mehreren flexiblen Leitungen besteht, die miteinander verbunden sind und durch Mittel, die mit den Enden verbunden sind, linear verschoben werden.

Die TW M 564 031 U offenbart eine Flaschenschutz-Einstellstruktur eines Förderers.

Die US 2008/099311 A1 offenbart eine Baugruppe zur Positionierung von Seitenschienen für einen Förderer zur Handhabung von Gegenständen, der sich in einer Förderrichtung erstreckt. Die Baugruppe umfasst einen Rahmen, zwei Seitenschienen, die beweglich an dem Rahmen auf gegenüberliegenden Seiten des Förderers angebracht sind und sich entlang der Förderrichtung erstrecken, wobei jede Seitenschiene ein Eingangszahnrad umfasst. Ein Getriebezug erstreckt sich zwischen einem Aktuator und dem mindestens einen Eingangszahnrad, wobei die Bewegung des Aktuators in die eine oder andere Richtung die Seitenschienen gleichzeitig über den Getriebezug und das Eingangszahnrad aufeinander zu oder voneinander weg bewegt.

Die DE 10 2013 107 038 A1 offenbart einen Transportabschnitt einer Horizontalfördereinrichtung zur Beförderung von Artikeln wie Flüssigkeitsbehältern oder Flaschen, die stehend oder hängend auf einer sich in horizontaler Förderrichtung erstreckenden Transportauflage zwischen zwei ungefähr parallel in einem, mindestens der Artikel- oder Behälterbreite entsprechenden Abstand angeordneten Führungselementen bewegt werden. Zumindest eines der beiden gegenüberliegend angeordneten Führungselemente ist über mehrere, an einem Maschinenrahmen oder Gestell verankerte Verstellelemente quer zur Förderrichtung in seinem Abstand zum anderen Führungselement verstellbar. Die Verstellelemente sind über einen gemeinsamen Drehantrieb miteinander gekoppelt und annähernd synchronisiert, wobei jedes Verstellelement einen rotatorischen Antrieb des gemeinsamen Drehantriebs über eine oder mehrere Übersetzungsstufen auf eine lineare Stellbewegung des daran aufgehängten Führungselements überträgt.

Nachteilig an bekannten Lösungen zur Führungsbreitenanpassung können eine mangelnde Flexibilität, ein hoher Platzbedarf, hohe Kosten aufgrund komplexer Systeme und/oder ein hoher Klärungsaufwand sein.

Der Erfindung liegt die Aufgabe zu Grunde, eine alternative und/oder verbesserte Vorrichtung zum Anpassen einer Führungsbreite einer Fördereinrichtung zu schaffen.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft eine Vorrichtung zum Anpassen einer Führungsbreite einer Fördereinrichtung zum Fördern von Behältern für eine Behälterbehandlungsanlage (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel). Die Vorrichtung weist ein längsbewegliches und biegsames (z. B. durch elastisches Verformen biegsames) Verstellelement auf. Die Vorrichtung weist ein Führungselement, vorzugsweise ein Führungsgeländer, zum Führen der Behälter entlang einer Förderrichtung auf. Das Führungselement kann zweckmäßig zum Anpassen der Führungsbreite quer zu der Förderrichtung bewegbar (z. B. verschiebbar) sein. Die Vorrichtung weist eine Getriebeeinrichtung auf, die zum Anpassen der Führungsbreite dazu ausgebildet ist, eine Längsbewegung, vorzugsweise eine Schub- und/oder Zugbewegung, des Verstellelements zu einer Bewegung (z. B. Verschiebung) des Führungselements quer zu der Förderrichtung umzuformen.

Die Biegsamkeit des Verstellelements kann eine Anwendung auch in Kurvenbereichen der Fördereinrichtung ermöglichen. Das Verstellelement kann einfach ausgestaltet sein, da die Einstellung der Förderbreite mittels einer einfachen Längsbewegung des Verstellelements bewirkt wird. Dieses kann beispielsweise als ein Drahtseil ausgeführt sein, mit dem sich beispielsweise auf einfache Weise auch die Anforderung bezüglich der Biegsamkeit erfüllen lässt. Somit braucht kein kompliziertes und teures Verstellelement, wie beispielsweise eine drehbare Welle oder Ähnliches, verwendet werden. Die Vorrichtung kann flexibel montiert werden und einen nur geringen Platzbedarf aufweisen. Es kann ferner ein geringer Klärungsaufwand bestehen. Die Vorrichtung kann leicht nachrüstbar sein und kostengünstig implementiert werden. Zweckmäßig kann die Längsbewegung des Verstellelements parallel zum Führungselement und/oder zur Förderrichtung sein.

In einem Ausführungsbeispiel ist das Verstellelement als ein Seil (z. B. gebildet aus einem oder mehreren parallelen oder verdrehten (geschlagenen) oder geflochtenen Drähten und oder Fasern), ein Riemen, ein Draht, eine Faser, eine Kette, ein Stab oder eine Stange ausgeführt. Zweckmäßig kann das Verstellelement somit kostengünstig ausgeführt sein, ohne dass eine Zuverlässigkeit der Vorrichtung beeinträchtigt wird.

In einem weiteren Ausführungsbeispiel ist das Verstellelement länglich ausgebildet und/oder erstreckt sich entlang des Führungselements, vorzugsweise parallel dazu. Damit kann ermöglich werden, dass dasselbe Verstellelement für mehrere beabstandet angeordnete Vorrichtungen zum Anpassen der Führungsbreite verwendet werden kann.

In einem weiteren Ausführungsbeispiel ist das Verstellelement motorisch und/oder manuell längsbewegbar und/oder nicht drehbar gelagert. Die Längsbewegung zum Verstellen des Verstellelements kann somit je nach Anforderung unterschiedlich bewirkt werden.

Erfindungsgemäß ist die Getriebeeinrichtung dazu ausgebildet, die Längsbewegung des Verstellelements in eine Drehbewegung umzuformen und die Drehbewegung in eine Linearbewegung zur Bewegung des Führungselements umzuformen. Zweckmäßig kann die Getriebeeinrichtung so durch nur zwei Bewegungsumformungen eine Verstellung der Führungsbreite ermöglichen.

In einer weiteren Ausführungsform weist die Getriebeeinrichtung eine Übersetzung ungleich 1, vorzugsweise kleiner als 1, auf. So kann beispielsweise eine besonders genaue Einstellung der Förderbreite erreicht werden, wenn eine große Längsbewegung des Verstellelements lediglich zu einer kleinen Querbewegung des Führungselements führt.

Erfindungsgemäß weist die Getriebeeinrichtung ein Schiebeelement und ein Drehelement, die miteinander in (z. B. formschlüssigem, kraftschlüssigem und/oder stoffschlüssigem) Eingriff sind, zum Umformen der Längsbewegung in die Drehbewegung auf. Zweckmäßig können das Schiebeelement und das Drehelement eine Übersetzung ungleich 1, vorzugsweise kleiner als 1, aufweisen, insbesondere in Abhängigkeit von einem Durchmesser des Drehelements.

Erfindungsgemäß ist das Schiebeelement an dem Verstellelement angebracht, was zweckmäßig ist, wenn das Verstellelement beispielsweise ein Seil, ein Draht oder eine Faser ist. Das Schiebeelement muss somit nicht entlang der gesamten Länge des Verstellelements vorhanden sein, sondern nur im relevanten Abschnitt.

Erfindungsgemäß ist das Schiebeelement mittels einer Klemmverbindung an dem Verstellelement angebracht, und/oder das Schiebeelement ist direkt an dem Verstellelement angeklemmt. Die Klemmverbindung bietet eine kostengünstige, zuverlässige und dauerhafte Verbindung zwischen dem Schiebeelement und dem Verstellelement.

In einem Ausführungsbeispiel weist das Schiebeelement eine erste Klemmbacke und eine zweite Klemmbacke auf, zwischen denen ein Abschnitt des Verstellelements eingeklemmt ist. Ein solcher Aufbau des Schiebeelements kann beispielsweise vorteilhaft verwendet werden, wenn das Verstellelement ein Seil ist. Das Schiebeelement kann so einfach an das Seil angeklemmt werden, indem es das Seil umgreift.

In einer Weiterbildung ist eine von der ersten Klemmbacke und der zweiten Klemmbacke in Eingriff mit dem Drehelement, vorzugsweise mittels einer Verzahnung (z. B. Zahnstangenabschnitt oder Zahnriemenabschnitt). Dies ermöglicht eine Funktionsintegration, da die Klemmbacke sowohl zum Anbringen an dem Verstellelement als auch zum Antreiben des Drehelements verwendbar ist.

In einem weiteren Ausführungsbeispiel weist die Getriebeeinrichtung eine Führung auf. Das Schiebeelement und/oder das Verstellelement ist an der Führung längsgeführt. Alternativ oder zusätzlich kann die Führung eine Verdrehung des Schiebeelements und/oder des Verstellelements verhindern. Die Führung kann eine definierte Längsbewegung des Verstellelements bewirken, sodass das Drehelement wie gewünscht angetrieben wird. Die Führung kann insbesondere bei einem Verstellelement verwendet werden, bei dem ein Risiko hinsichtlich einer Verdrehung bestehen kann, wie z. B. bei einem Seil.

In einer Ausführungsform ist das Schiebeelement ein (z. B. fester oder biegsamer) Stangenabschnitt, vorzugsweise ein Zahnstangenabschnitt, und/oder das Drehelement ist ein Rad, vorzugsweise ein Zahnrad, besonders bevorzugt ein Stirnzahnrad. Besonders bevorzugt kann so beispielsweise ein Zahnstangenabschnitt an einem Seil angeklemmt sein um ein Stirnzahnrad anzutreiben.

In einer weiteren Ausführungsform ist das Schiebeelement ein (z. B. fester oder biegsamer) Riemenabschnitt, vorzugsweise ein Zahnriemenabschnitt oder ein Keilriemenabschnitt, und/oder das Drehelement ist eine Rolle. Alternativ kann das Schiebeelement beispielsweise ein Kettenabschnitt und/oder das Drehelement ein Kettenrad sein. Die Verwendung von Riemen oder Ketten kann ebenfalls eine kostengünstige und zuverlässige Implementierung ermöglichen.

In einer Ausführungsvariante weist die Getriebeeinrichtung einen Gewindetrieb zum Umformen der Drehbewegung in die Linearbewegung auf. Die Verwendung des Gewindetriebs kann eine teilweise Integration in dem Drehelement ermöglichen.

In einer Weiterbildung weist der Gewindetrieb ein (z. B. zentrales) Innengewindeloch des Drehelements auf. Dadurch kann beispielsweise Bauraum eingespart werden.

Zweckmäßig kann der Gewindetrieb eine Übersetzung ungleich 1, vorzugsweise kleiner als 1, aufweisen, insbesondere in Abhängigkeit von einem Durchmesser des Innengewindelochs und/oder einer Steigung des Gewindes.

In einer weiteren Ausführungsvariante weist der Gewindetrieb eine Gewindestange auf, die zweckmäßig in Eingriff mit dem Innengewindeloch ist, sodass eine Drehbewegung des Drehelements eine Linearbewegung der Gewindestange bewirkt.

In einem Ausführungsbeispiel ist das Führungselement an einem Ende der Gewindestange angebracht. Vorzugsweise kann ein Verbindungselement, das drehfest mit der Gewindestange verbunden ist, und ein weiteres Verbindungselement (z. B. ein Flacheisen), das fest mit dem Führungselement verbunden ist, miteinander verbunden, besonders bevorzugt miteinander verschraubt, sein. So kann das Führungselement auf einfache und zuverlässige Weise an einem Ende der Gewindestange angebracht werden.

Die Erfindung betrifft auch eine Vorrichtung zum Transportieren von Behältern für eine Behälterbehandlungsanlage (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel). Die Vorrichtung weist eine Fördereinrichtung mit einem Förderelement, vorzugsweise einem Förderband, zum Fördern der Behälter (z. B. stehend oder hängend) auf. Die Vorrichtung weist ferner mehrere Vorrichtungen zum Anpassen einer Führungsbreite wie hierin offenbart auf, die entlang einer Längsaußenseite oder entlang beider Längsaußenseiten der Fördereinrichtung angeordnet sind, wobei die auf derselben Längsaußenseite angeordneten Vorrichtungen jeweils das Verstellelement teilen. Vorzugsweise sind die mehreren Vorrichtungen verdrehsicher und/oder höhenverstellbar angebracht.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Ansicht einer Vorrichtung zum Transportieren von Behältern gemäß einem Ausführungsbeispiel der vorliegenden Offenbarung;
- Figur 2: eine Vorderansicht der beispielhaften Vorrichtung zum Transportieren von Behältern;
- Figur 3: eine perspektivische Ansicht einer Vorrichtung zum Verändern einer Führungsbreite einer Fördereinrichtung zum Fördern von Behältern gemäß einem Ausführungsbeispiel der vorliegenden Offenbarung;
- Figur 4: eine perspektivische Ansicht der beispielhaften Vorrichtung zum Verändern der Führungsbreite, mit teilweise geöffnetem Gehäuse; und
- Figuren 5 -7: perspektivische Ansichten der beispielhaften Vorrichtung zum Verändern der Führungsbreite, die einen Aufbau eines Verbindungsbauteils zur Anbringung an ein Führungselement der Vorrichtung zum Verändern der Führungsbreite zeigen.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

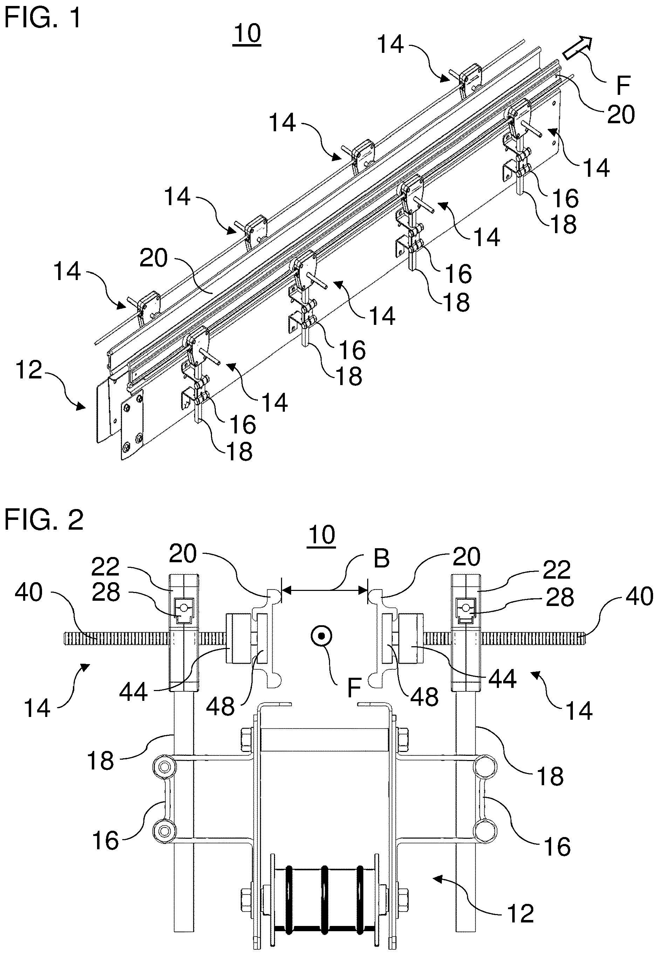

Die Figuren 1 und 2 zeigen eine Vorrichtung 10 zum Transportieren von Artikeln oder Behältern (nicht dargestellt), z. B. Flaschen oder Dosen. Die Vorrichtung 10 kann zweckmäßig in einer Behälterbehandlungsanlage zum Herstellen, Reinigen, Prüfen, Füllen, Verschließen, Etikettieren, Bedrucken und/oder Verpacken von Behältern, vorzugsweise für Getränke oder flüssige Nahrungsmittel, umfasst sein.

Die Vorrichtung 10 weist eine Fördereinrichtung 12 und mehrere Vorrichtungen 14 zum Verändern einer Führungsbreite B (siehe Figur 2) für die Fördereinrichtung 12 auf.

Die Fördereinrichtung 12 kann eine Transportauflage aufweisen, auf der Behälter beispielsweise stehend gefördert werden können. Die Fördereinrichtung 12 fördert die Behälter in einer Förderrichtung F (siehe Pfeil in Figur 1 und 2). Beispielsweise kann die Fördereinrichtung 12 ein umlaufendes Förderband (nicht dargestellt) aufweisen, auf dem die Behälter gefördert werden können. Um unterschiedlich große Behälter mit der gleichen Fördereinrichtung 12, insbesondere einspurig und/oder mit verringertem Kipprisiko, fördern zu können, kann die Führungsbreite B der Fördereinrichtung 12 mittels der Vorrichtungen 14 verstellt werden. Die Führungsbreite B erstreckt sich zwischen einander gegenüberliegenden Führungselementen 20 der Vorrichtungen 14.

Jeweils mehrere Vorrichtungen 14 sind an beiden Längsaußenseiten der Fördereinrichtung 12 angeordnet. Zweckmäßig sind die mehreren Vorrichtungen 14 an den beiden Längsaußenseiten der Fördereinrichtung 12 befestigt. Die Vorrichtungen 14 können so an der Fördereinrichtung 12 befestigt sein, dass sie sich nicht verdrehen können. Beispielsweise sind die Vorrichtungen 14 jeweils mittels einer Halterung 16 an einer der Längsaußenseiten der Fördereinrichtung 12 befestigt. Die Halterung 16 hält jeweils einen stab- oder rohrförmigen Körper 18 drehfest. Zweckmäßig klemmen die Halterungen 16 die Körper 18. Vor dem Klemmen können die Körper 18 frei bezüglich der Halterungen 16 positioniert werden. Die Vorrichtungen 14 sind somit höhenverstellbar an der Fördereinrichtung 12 befestigt. Die Körper 18 sind drehfest mit den Vorrichtungen 14 verbunden. Zweckmäßig können die Körper 18 als mehrkantige Körper ausgeführt sein, z. B. als Vierkant-Körper, wie dargestellt ist. Somit kann die verdrehsichere Befestigung auf einfache Weise realisiert werden. Es ist beispielsweise auch möglich, dass die mehreren Vorrichtungen 14 anderweitig, vorzugsweise verdrehsicher, befestigt sind und/oder nur an einer der beiden Längsaußenseiten der Fördereinrichtung 12 angeordnet sind.

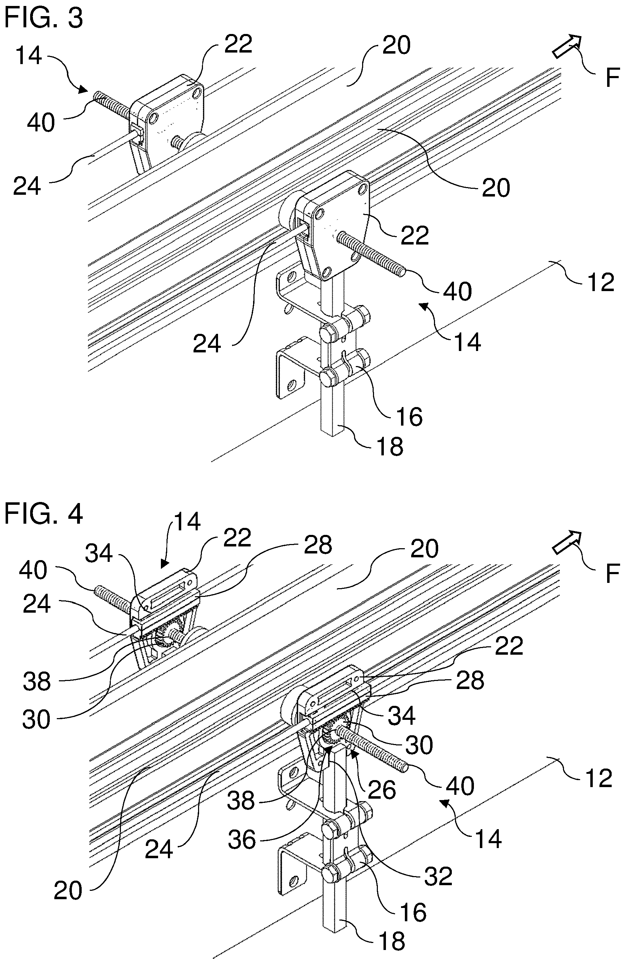

Die Figuren 3 und 4 zeigen die Vorrichtungen 14 in größerem Detail. In Figur 4 ist zur Veranschaulichung einer Konfiguration ein Gehäuse 22 der Vorrichtung 14 geöffnet.

Die Vorrichtung 14 weist ein Verstellelement 24, eine Getriebeeinrichtung 26 und das Führungselement 20 auf. Die Vorrichtungen 14 auf jeweils einer der Längsaußenseiten der Fördereinrichtung 12 können sich gemeinsam ein jeweiliges Verstellelement 24 und zumindest teilweise ein jeweiliges Führungselement 20 teilen.

Die Vorrichtung 14 ist dazu ausgebildet, zum Verstellen der Führungsbreite B (siehe Figur 2) eine Längsbewegung des Verstellelements 24 mittels der Getriebeeinrichtung 26 zu einer Querbewegung des Führungselements 20 umzuformen.

Im Einzelnen kann die Vorrichtung 14 die Längsbewegung des Verstellelements 24 zunächst in eine Drehbewegung umformen. Die Drehbewegung wiederum kann in eine Linearbewegung zum Verschieben des Führungselements 20 umgeformt werden.

Das Verstellelement 24 kann länglich, vorzugsweise stab- oder stangenförmig, ausgeführt sein. Das Verstellelement 24 kann sich entlang der Fördereinrichtung 12 erstrecken, z. B. im Wesentlichen parallel dazu. Das Verstellelement 24 ist biegsam ausgeführt, vorzugsweise als ein biegsames Seil, z. B. ein biegsames Drahtseil, wie dargestellt ist. Das biegsame Seil kann beispielsweise aus mehreren parallelen, verdrehten/geschlagenen oder geflochtenen Drähten oder Fasern gebildet sein. Ein Vorteil bei der Verwendung des biegsamen Verstellelements 24 liegt darin, dass die Vorrichtung 14 auch entlang von Kurven der Fördereinrichtung 12 verwendet werden kann. Es ist möglich, dass statt eines biegsamen Seils beispielsweise ein biegsamer Riemen (z. B. Endlosriemen), ein einziger biegsamer Draht, eine einzige biegsame Faser, eine Kette, ein biegsamer Stab, eine biegsame Stange usw. verwendet wird.

Eine Längsbewegung des Verstellelements 24 kann motorisch oder händisch bewirkt werden. Die Längsbewegung kann je nach Ausgestaltung des Verstellelements 24 eine Schub- und/oder Zugbewegung sein. Die Längsbewegung des Verstellelements 24 kann beispielsweise durch einseitiges Aufrollen, z. B. im Falle eines Seils, eines Drahts, einer Faser, eines Riemens oder einer Kette, erfolgen. Eine Längsverschiebung des Verstellelements 24 kann beispielsweise ebenfalls durch einen Umlaufantrieb, z. B. im Falle eines Endlosriemens oder einer Endloskette, oder durch einen Linearantrieb, z. B. im Falle eines Stabs oder einer Stange, erfolgen.

Das Verstellelement 24 ist über ein Schiebeelement 28 in Eingriff mit der Getriebeeinrichtung 26. Im Einzelnen kann das Schiebeelement 28 in Eingriff mit einem Drehelement 30 der Getriebeeinrichtung 26 sein. Der Eingriff ist derart, dass eine Längsbewegung des Schiebeelements 28 zu einer Drehbewegung des Drehelements 30 führt.

Erfindungsgemäß ist das Schiebeelement 28 an dem Verstellelement 24 angeklemmt. Das Schiebeelement 28 kann zwei Klemmbacken aufweisen, die einen Abschnitt des Verstellelements 24 zwischen sich einklemmen können. Alternative oder zusätzliche Anbringungsarten sind auch möglich, z. B. Schraubverbindung, Klebeverbindung, Rastverbindung usw.

Wie außerdem dargestellt ist, kann das Schiebelement 28 als ein Zahnstangenabschnitt und das Drehelement 30 als ein Zahnrad, insbesondere ein Stirnzahnrad, ausgeführt sein. Der Zahnstangenabschnitt kämmt mit dem Zahnrad. Eine Längsbewegung/Verschiebebewegung des Zahnstangenabschnitts führt zu einer Drehbewegung des Zahnrads. Beispielsweise kann der Zahnstangenabschnitt durch eine der Klemmbacken des Schiebeelements 28 gebildet sein. Es ist auch möglich, dass andere Paarungen für das Schiebeelement 28 und das Drehelement 30 verwendet werden, um eine Längsbewegung des Schiebeelements 28 in eine Drehbewegung des Drehelements 30 umzuformen. Beispielsweise kann das Schiebeelement 28 ein Kettenabschnitt und das Drehelement 30 ein Kettenrad sein. Das Schiebeelement 28 kann auch ein Seilabschnitt, ein Riemenabschnitt (z. B. Keilriemenabschnitt oder ein Zahnriemenabschnitt), ein beispielsweise profilierter Stab- oder Stangenabschnitt sein, und das Drehelement 30 kann eine angetriebene Rolle sein.

Die Vorrichtung 14 kann das Gehäuse 22 aufweisen. In dem Gehäuse 22 können das Schiebeelement 28 und das Drehelement 30 aufgenommen sein. Das Schiebeelement 28 kann durch eine Führung 34 längsverschiebbar in dem Gehäuse 22 gelagert sein. Die Führung 34 kann beispielsweise durch eine oder mehrere Gehäusewände des Gehäuses 22 ausgebildet sein. Die Führung 34 kann ferner dazu ausgebildet sein, ein Verdrehen des Schiebeelements 28, d. h. eine Drehung des Schiebeelements 28 um dessen Längsachse, zu verhindern, wenn gewünscht. Das Drehelement 30 kann drehbar in dem Gehäuse 22 gelagert sein. An einem unteren Ende des Gehäuses 22 kann der stab- oder rohrförmige Körper 18 drehfest mit dem Gehäuse 22 verbunden sein, z. B. durch eine mehrkantige Aufnahme 32 im Gehäuse 22. Das Gehäuse 22 kann beispielsweise zwei aneinander befestigbare Gehäusehälften aufweisen, wie in den Figuren dargestellt ist. In Figur 4 ist zum Darstellen einer Innenkonfiguration der Vorrichtung 14 eine der beiden Gehäusehälften weggelassen.

Die Vorrichtung 14 kann ferner einen Gewindetrieb 36 aufweisen. Mittels des Gewindetriebs 36 kann eine Drehbewegung des Drehelements 30 in eine Linearbewegung umgeformt werden. Der Gewindetrieb 36 weist ein zentrales Innengewindeloch 38 in dem Drehelement 30 auf. Der Gewindetrieb 36 weist zudem eine Gewindestange 40 auf. Die Gewindestange 40 ist in Eingriff mit dem Innengewindeloch 38. Das Führungselement 20 ist an einem Ende der Gewindestange 40 angebracht. Das Führungselement 20 ist vorzugsweise von der Gewindestange 40 getragen. Die Gewindestange 40 ist drehfest an dem Führungselement 20 gehalten. Eine Drehbewegung des Drehelements 30 und somit des Innengewindelochs 38 führt somit zu einer Linearbewegung der Gewindestange 40 quer zu der Förderrichtung F der Fördereinrichtung 12. Die Linearbewegung der Gewindestange 40 führt zu einer Querbewegung des Führungselements 20 zum Einstellen der Führungsbreite B (siehe Figur 2).

Durch eine Anpassung der Steigung der Gewindegänge und eines Durchmessers des Innengewindelochs 38 und der Gewindestange 40 kann ein gewünschtes Übersetzungsverhältnis für den Gewindetrieb 36 und damit die Getriebeeinrichtung 26 vorbestimmt werden. Ferner kann die Übersetzung durch einen Durchmesser des Drehelements 30 beeinflusst werden. Beispielsweise kann die Getriebeeinrichtung 26 so ausgeführt sein, dass eine vergleichsweise große Längsbewegung des Verstellelements 24 zu einer vergleichsweise kleinen Querbewegung der Gewindestange 40 führt, um beispielsweise eine gewünschte Führungsbreite B (siehe Figur 2) sehr genau einstellen zu können. Vorzugsweise kann die Getriebeeinrichtung 26 eine Übersetzung kleiner als 1 aufweisen, d. h., ein Ausmaß der Längsbewegung des Verstellelements 24 ist größer als ein Ausmaß in der resultierenden Linearbewegung der Gewindestange 40 bzw. des Führungselements 20.

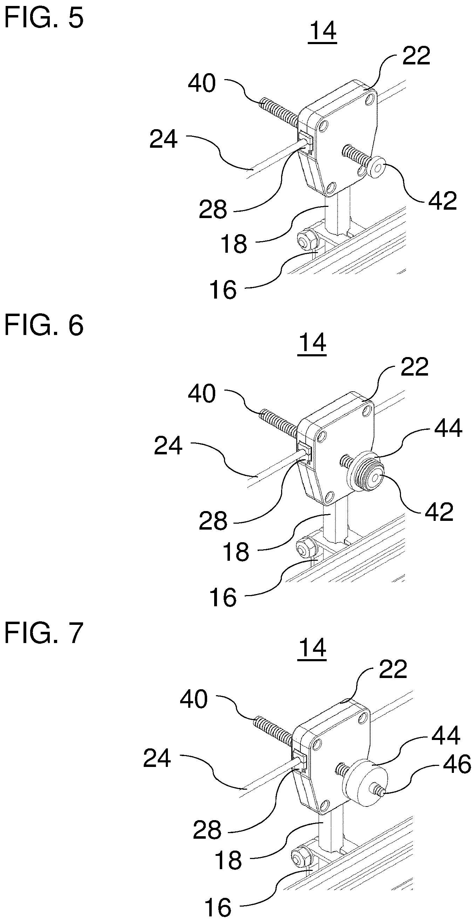

Die Figuren 5 bis 7 zeigen einen beispielhaften Aufbau einer Verbindung der Gewindestange 40 und des Führungselements 20. An einem dem Führungselement 20 zugewandten Ende kann auf der Gewindestange 40 ein Verbindungselement 42, z. B. in Form eines Lagerinnenrings, befestigt sein. Auf das Verbindungselement 42 kann ein zweckmäßig zweiteiliges Befestigungselement 44 fest aufgesteckt, verklebt oder Ähnliches sein. Die Einzelteile des Befestigungselements 44 können beispielsweise miteinander verschraubt sein, wie dargestellt ist. Das Befestigungselement 44 kann wiederum einen Befestigungsabschnitt 46, z. B. in Form einer Gewindestange, aufweisen. An dem Befestigungsabschnitt 46 kann ein weiteres Verbindungselement 48 (siehe Figur 2), z. B. ein Flacheisen, zur Verbindung mit dem Führungselement 20 befestigt werden. Das weitere Verbindungselement 48 kann beispielsweise in einer Aufnahme des Führungselements 20 aufgenommen sein (siehe ebenfalls Figur 2).

Die Erfindung ist nicht auf die vorstehend beschriebenen bevorzugten Ausführungsbeispiele beschränkt. Vielmehr ist eine Vielzahl von Varianten und Abwandlungen möglich, die in den durch die beigefügten Ansprüche definierten Schutzbereich fallen.

### Bezugszeichenliste

- 10: Vorrichtung zum Transportieren von Behältern
- 12: Fördereinrichtung
- 14: Vorrichtung zum Verändern einer Führungsbreite
- 16: Halterung
- 18: Stab- oder rohrförmiger Körper
- 20: Führungselement
- 22: Gehäuse
- 24: Verstellelement
- 26: Getriebeeinrichtung
- 28: Schiebeelement
- 30: Drehelement
- 32: Aufnahme
- 34: Führung
- 36: Gewindetrieb
- 38: Innengewindeloch
- 40: Gewindestange
- 42: Verbindungselement
- 44: Befestigungselement
- 46: Befestigungsabschnitt
- 48: Weiteres Verbindungselement

- F: Förderrichtung
- B: Führungsbreite

## Patentansprüche

1. Vorrichtung (14) zum Anpassen einer Führungsbreite (B) einer Fördereinrichtung (12) zum Fördern von Behältern für eine Behälterbehandlungsanlage, aufweisend:
ein längsbewegliches und biegsames Verstellelement (24);
ein Führungselement (20), vorzugsweise ein Führungsgeländer, zum Führen der Behälter entlang einer Förderrichtung (F); und
eine Getriebeeinrichtung (26), die zum Anpassen der Führungsbreite (B) dazu ausgebildet ist, eine Längsbewegung, vorzugsweise eine Schub- und/oder Zugbewegung, des Verstellelements (24) zu einer Bewegung des Führungselements (20) quer zu der Förderrichtung (F) umzuformen,
wobei
die Getriebeeinrichtung (26) dazu ausgebildet ist, die Längsbewegung des Verstellelements (24) in eine Drehbewegung umzuformen und die Drehbewegung in eine Linearbewegung zur Bewegung des Führungselements (20) umzuformen,
**dadurch gekennzeichnet, dass**
die Getriebeeinrichtung (26) ein Schiebeelement (28) und ein Drehelement (30), die miteinander in Eingriff sind, zum Umformen der Längsbewegung in die Drehbewegung aufweist, und dass
das Schiebeelement (28) mittels einer Klemmverbindung an dem Verstellelement (24) angebracht ist, und/oder das Schiebeelement (28) direkt an dem Verstellelement (24) angeklemmt ist.

2. Vorrichtung (14) nach Anspruch 1, wobei:
das Verstellelement (24) als ein Seil, ein Riemen, ein Draht, eine Faser, eine Kette, ein Stab oder eine Stange ausgeführt ist;
das Verstellelement (24) länglich ausgebildet ist und/oder sich entlang des Führungselements (20) erstreckt, vorzugsweise parallel dazu; und/oder
das Verstellelement (24) motorisch und/oder manuell längsbewegbar ist; und/oder
das Verstellelement (24) nicht drehbar gelagert ist.

3. Vorrichtung (14) nach Anspruch 1 oder Anspruch 2, wobei:
die Getriebeeinrichtung (26) eine Übersetzung ungleich 1, vorzugsweise kleiner als 1, aufweist.

4. Vorrichtung (14) nach einem der vorherigen Ansprüche, wobei:
das Schiebeelement (28) eine erste Klemmbacke und eine zweite Klemmbacke aufweist, zwischen denen ein Abschnitt des Verstellelements (24) eingeklemmt ist.

5. Vorrichtung (14) nach Anspruch 4, wobei:
eine von der ersten Klemmbacke und der zweiten Klemmbacke in Eingriff mit dem Drehelement (30) ist, vorzugsweise mittels einer Verzahnung.

6. Vorrichtung (14) nach einem der vorherigen Ansprüche, wobei die Getriebeeinrichtung (26) eine Führung (34) aufweist, wobei:
das Schiebeelement (28) und/oder das Verstellelement (24) an der Führung (34) längsgeführt ist; und/oder
die Führung (34) eine Verdrehung des Schiebeelements (28) und/oder des Verstellelements (24) verhindert.

7. Vorrichtung (14) nach einem der vorherigen Ansprüche, wobei:
das Schiebeelement (28) ein Stangenabschnitt, vorzugsweise ein Zahnstangenabschnitt, und das Drehelement (30) ein Rad, vorzugsweise ein Zahnrad, besonders bevorzugt ein Stirnzahnrad, ist; oder
das Schiebeelement (28) ein Riemenabschnitt, vorzugsweise ein Zahnriemenabschnitt oder ein Keilriemenabschnitt, und das Drehelement (30) ein Rolle ist; oder
das Schiebeelement (28) ein Kettenabschnitt und das Drehelement (30) ein Kettenrad ist.

8. Vorrichtung (14) nach einem der vorherigen Ansprüche, wobei:
die Getriebeeinrichtung (26) einen Gewindetrieb (36) zum Umformen der Drehbewegung in die Linearbewegung aufweist.

9. Vorrichtung (14) nach Anspruch 8, wobei:
der Gewindetrieb (36) ein Innengewindeloch (38) des Drehelements (30) aufweist.

10. Vorrichtung (14) nach Anspruch 9, wobei:
der Gewindetrieb (36) eine Gewindestange (40) aufweist, die in Eingriff mit dem Innengewindeloch (38) ist, sodass eine Drehbewegung des Drehelements (30) eine Linearbewegung der Gewindestange (40) bewirkt.

11. Vorrichtung (14) nach Anspruch 10, wobei:
das Führungselement (20) an einem Ende der Gewindestange (40) angebracht ist, wobei vorzugsweise:
ein Verbindungselement (42), das drehfest mit der Gewindestange (40) verbunden ist, und ein weiteres Verbindungselement (48), das fest mit dem Führungselement (20) verbunden ist, miteinander verbunden, besonders bevorzugt miteinander verschraubt, sind.

12. Vorrichtung (10) zum Transportieren von Behältern für eine Behälterbehandlungsanlage, aufweisend:
eine Fördereinrichtung (12) mit einem Förderelement, vorzugsweise einem Förderband, zum Fördern der Behälter; und
mehrere Vorrichtungen (14) nach einem der vorherigen Ansprüche, die entlang einer Längsaußenseite oder entlang beider Längsaußenseiten der Fördereinrichtung (12) angeordnet sind, wobei die auf derselben Längsaußenseite angeordneten Vorrichtungen (14) jeweils das Verstellelement (24) teilen, wobei die mehren Vorrichtungen (14) vorzugsweise verdrehsicher und/oder höhenverstellbar angebracht sind.

## Claims

1. An apparatus (14) for adapting a guide width (B) of a conveying device (12) for conveying containers for a container treatment installation, comprising:
a longitudinally movable and pliable adjusting element (24);
a guide element (20), preferably a guide rail, for guiding the containers along a conveying direction (F); and
a transmission device (26) which, for the adaptation of the guide width (B), is configured to convert a longitudinal movement, preferably a pushing and/or pulling movement, of the adjusting element (24) into a movement of the guide element (20) transversely with respect to the conveying direction (F),
wherein
the transmission device (26) is configured to convert the longitudinal movement of the adjusting element (24) into a rotary movement, and to convert the rotary movement into a linear movement in order to move the guide element (20),
**characterized in that**
the transmission device (26) comprises a sliding element (28) and a rotary element (30), which are in engagement with one another, for converting the longitudinal movement into the rotary movement, and **in that**
the sliding element (28) is attached to the adjusting element (24) by means of a clamping connection, and/or the sliding element (28) is clamped directly to the adjusting element (24).

2. The apparatus (14) according to Claim 1, wherein:
the adjusting element (24) is embodied in the form of a cable, a belt, a wire, a fiber, a chain, a bar or a rod;
the adjusting element (24) is of elongate configuration and/or extends along the guide element (20), preferably parallel thereto; and/or
the adjusting element (24) is longitudinally movable by motor and/or manually; and/or
the adjusting element (24) is mounted in a non-rotatable manner.

3. The apparatus (14) according to Claim 1 or Claim 2, wherein:
the transmission device (26) has a transmission ratio not equal to 1, preferably smaller than 1.

4. The apparatus (14) according to one of the preceding Claims, wherein:
the sliding element (28) comprises a first clamping jaw and a second clamping jaw, a portion of the adjusting element (24) being clamped in between said clamping jaws.

5. The apparatus (14) according to Claim 4, wherein:
one of the first clamping jaw and the second clamping jaw is in engagement with the rotary element (30), preferably by means of a toothing.

6. The apparatus (14) according to one of the preceding Claims, wherein the transmission device (26) comprises a guide (34), wherein:
the sliding element (28) and/or the adjusting element (24) are/is longitudinally guided on the guide (34); and/or
the guide (34) prevents a rotation of the sliding element (28) and/or of the adjusting element (24).

7. The apparatus (14) according to one of the preceding Claims, wherein:
the sliding element (28) is a rod portion, preferably a toothed rack portion, and the rotary element (30) is a wheel, preferably a gear wheel, particularly preferably a spur gear wheel; or
the sliding element (28) is a belt portion, preferably a toothed belt portion or a V-belt portion, and the rotary element (30) is a roller; or
the sliding element (28) is a chain portion and the rotary element (30) is a chain wheel.

8. The apparatus (14) according to one of the preceding Claims, wherein:
the transmission device (26) comprises a screw drive (36) for converting the rotary movement into the linear movement.

9. The apparatus (14) according to Claim 8, wherein:
the screw drive (36) comprises an internally threaded hole (38) of the rotary element (30).

10. The apparatus (14) according to Claim 9, wherein:
the screw drive (36) comprises a threaded rod (40) which is in engagement with the internally threaded hole (38), and therefore a rotary movement of the rotary element (30) brings about a linear movement of the threaded rod (40).

11. The apparatus (14) according to Claim 10, wherein:
the guide element (20) is attached to an end of the threaded rod (40),
wherein preferably:
a connecting element (42), which is connected to the threaded rod (40) in a rotationally fixed manner, and a further connecting element (48), which is connected to the guide element (20) in a fixed manner, are connected to one another, particularly preferably are screwed to one another.

12. An apparatus (10) for transporting containers for a container treatment installation, comprising:
a conveying device (12) with a conveying element, preferably a conveyor belt, for conveying the containers; and
a plurality of apparatuses (14) according to one of the preceding claims, said apparatuses being arranged along one longitudinal outer side or along both longitudinal outer sides of the conveying device (12), wherein the apparatuses (14) arranged on the same longitudinal outer side each share the adjusting element (24), wherein the plurality of apparatuses (14) are preferably attached in a rotationally secure and/or height-adjustable manner.

## Revendications

1. Dispositif (14) pour l'ajustement d'une largeur de guide (B) d'un convoyeur (12) destiné au transport de récipients pour une installation de traitement de récipients, présentant :
un élément de réglage (24) flexible et longitudinalement mobile ;
un élément de guidage (20), de préférence une rampe de guidage, pour le guidage des récipients le long d'une direction de transport (F) ; et
un dispositif de transmission (26) qui, pour l'ajustement de la largeur de guide (B), est conçu pour transformer un mouvement longitudinal, de préférence un mouvement de poussée et/ou de traction, de l'élément de réglage (24) en un mouvement de l'élément de guidage (20) perpendiculairement à la direction de transport (F),
dans lequel
le dispositif de transmission (26) est conçu pour transformer le mouvement longitudinal de l'élément de réglage (24) en un mouvement de rotation et le mouvement de rotation en un mouvement linéaire pour le mouvement de l'élément de guidage (20),
**caractérisé en ce que**
le dispositif de transmission (26) présente un élément coulissant (28) et un élément rotatif (30) qui sont en prise l'un avec l'autre pour la transformation du mouvement longitudinal en mouvement rotatif, et **en ce que**
l'élément coulissant (28) est fixé à l'élément de réglage (24) à l'aide d'une liaison à serrage, et/ou l'élément coulissant (28) est fixé directement à l'élément de réglage (24).

2. Dispositif (14) selon la revendication 1, dans lequel :
l'élément de réglage (24) est réalisé sous la forme d'une corde, une courroie, fil, fibre, chaîne, barre ou tige ;
l'élément de réglage (24) est réalisé d'une manière oblongue et/ou s'étend le long de l'élément de guidage (20), de préférence parallèle à celui-ci ; et/ou
l'élément de réglage (24) peut être déplacé longitudinalement par moteur et/ou manuellement ; et/ou
l'élément de réglage (24) est monté non rotatif.

3. Dispositif (14) selon la revendication 1 ou la revendication 2, dans lequel :
le dispositif de transmission (26) présente un rapport de transmission différent de 1, de préférence inférieur à 1.

4. Dispositif (14) selon l'une quelconque des revendications précédentes, dans lequel :
l'élément coulissant (28) présente une première mâchoire de serrage et une seconde mâchoire de serrage, entre lesquelles une section de l'élément de réglage (24) est serrée.

5. Dispositif (14) selon la revendication 4, dans lequel :
l'une parmi la première mâchoire de serrage et la seconde mâchoire de serrage est en prise avec l'élément rotatif (30), de préférence au moyen d'une denture.

6. Dispositif (14) selon l'une quelconque des revendications précédentes, dans lequel le dispositif de transmission (26) présente un guide (34), dans lequel :
l'élément coulissant (28) et/ou l'élément de réglage (24) est guidé longitudinalement sur le guide (34) ; et/ou
le guide (34) empêche une rotation de l'élément coulissant (28) et/ou de l'élément de réglage (24).

7. Dispositif (14) selon l'une quelconque des revendications précédentes, dans lequel :
l'élément coulissant (28) est une section de tige, de préférence une section de crémaillère, et l'élément rotatif (30) est une roue, de préférence une roue dentée, de préférence une roue dentée frontale ; ou
l'élément coulissant (28) est une section de courroie, de préférence une section de courroie dentée ou une section de courroie trapézoïdale, et l'élément rotatif (30) est un rouleau ; ou
l'élément coulissant (28) est une section de chaîne et l'élément rotatif (30) est un pignon.

8. Dispositif (14) selon l'une quelconque des revendications précédentes, dans lequel :
le dispositif de transmission (26) présente un entraînement fileté (36) pour la transformation du mouvement rotatif en mouvement linéaire.

9. Dispositif (14) selon la revendication 8, dans lequel :
l'entraînement fileté (36) présente un trou à filetage intérieur (38) de l'élément rotatif (30).

10. Dispositif (14) selon la revendication 9, dans lequel :
l'entraînement fileté (36) présente une tige filetée (40), qui est en prise avec le trou à filetage intérieur (38), de telle sorte qu'un mouvement rotatif de l'élément rotatif (30) entraîne un mouvement linéaire de la tige filetée (40).

11. Dispositif (14) selon la revendication 10, dans lequel :
l'élément de guidage (20) est monté sur une extrémité de la tige filetée (40), dans lequel de préférence :
un élément de connexion (42), qui est connecté solidaire en rotation à la tige filetée (40), et un autre élément de connexion (48), qui est connecté de manière fixe à l'élément de guidage (20), sont connectés l'un à l'autre, encore plus préférablement vissés l'un à l'autre.

12. Dispositif (10) destiné au transport de récipients pour une installation de traitement de récipients, présentant :
un convoyeur (12) comprenant un élément de transport, de préférence une bande transporteuse pour le transport des récipients ; et
plusieurs dispositifs (14) selon l'une quelconque des revendications précédentes, qui sont disposés le long d'un côté extérieur longitudinal ou le long des deux côtés longitudinaux du convoyeur (12), dans lequel les dispositifs (14) disposés sur le même côté extérieur longitudinal divisent respectivement l'élément de réglage (24), dans lequel les nombreux dispositifs (14) sont montés de préférence de manière fixe en rotation et/ou réglables en hauteur.
